# EUROPEAN PATENT APPLICATION

(11) **EP 4 818 965 A1**
(43) Date of publication of application: **07.10.2026**
(21) Application number: 26169106.7
(22) Date of filing: 30.03.2026
(51) Int. Cl.: G06F 40/30, G06N 3/045, G06N 3/0475, G06N 3/08, G06F 40/216, G06F 40/284, G06F 16/34, G06F 16/3329

(54) **IMPROVED LANGUAGE MODEL WITH REDUCED HALLUCINATION**

(30) Priority: 31.03.2025 US 202519096662
(71) Applicant: Intuit Inc., Mountain View, CA 94043 (US)
(72) Inventor: WANG, Yu, Mountain View, 94043 (US); ZHANG, Jiaxin, Mountain View, 94043 (US); GAO, Xiang, Mountain View, 94043 (US); CUI, Wendi, Mountain View, 94043 (US); DAS, Kamalika, Mountain View, 94043 (US)
(74) Representative: D Young & Co LLP

(57) **Abstract**

A method including receiving an input for a language model including decoder layers having attention heads. The language model predicts a chunk of tokens based on the input. Predicting includes determining, for each of the attention heads, corresponding attention map weights from the input. The method also includes determining, from the corresponding attention map weights of each of the attention heads, a lookback ratio vector for the chunk of tokens. A hallucination score for the chunk of tokens is predicted using the lookback ratio vector. A determination is made that the hallucination score fails to satisfy a predefined threshold, λ, such that the chunk of tokens represents a hallucination of the language model. An edit direction for the corresponding attention map weights for the chunk of tokens is determined. The attention map weights of at least some attention heads are modified to generate a post-process language model.

## Description

### BACKGROUND

Language models, such as CHATGPT^{®} by OpenAI, are useful computer tools for processing language requests, such as to summarize text, answer questions, *etc.* However, a technical problem with language models is that, infrequently, they may generate outputs that, to a human, are clearly incorrect, nonsensical, or otherwise wrong. When such an output occurs the language model may be said to "hallucinate," though computers are incapable of hallucinating like a human.

Thus, a technical problem exists. The technical problem includes, at least, improving a computer to reduce language model hallucination.

### SUMMARY

Particular aspects are set out in the appended independent claims. Various optional embodiments are set out in the dependent claims. One or more embodiments provide for a method. The method includes receiving an input for a language model including a number of decoder layers. Each of the number of decoder layers includes a number of attention heads. The method also includes predicting, by the language model, a chunk of tokens based on the input. Predicting the chunk of tokens includes determining, for each of the number of attention heads, corresponding attention map weights from the input. The method also includes determining, from the corresponding attention map weights of each of the number of attention heads, a lookback ratio vector for the chunk of tokens. The method also includes predicting, using the lookback ratio vector, a hallucination score for the chunk of tokens. The method also includes determining that the hallucination score fails to satisfy a predefined threshold, λ, such that the chunk of tokens represents a hallucination of the language model. The method also includes determining, responsive to the chunk of tokens representing the hallucination, an edit direction for the corresponding attention map weights for the chunk of tokens. The method also includes modifying the language model by adjusting, using the edit direction, the corresponding attention map weights of at least some of the number of attention heads to generate a post-process language model.

One or more embodiments also provide for a system. The system includes a computer processor and a data repository in communication with the computer processor. The data repository stores an input. The data repository also stores a chunk of tokens. The data repository also stores corresponding attention map weights. The data repository also stores a lookback ratio vector for the chunk of tokens. The data repository also stores a hallucination score. The data repository also stores a predefined threshold, λ. The data repository also stores an edit direction for the corresponding attention map weights for the chunk of tokens. The system also includes a language model, executable by the computer processor, and including a number of decoder layers. Each of the number of decoder layers includes a number of attention heads. The language model, when executed by the computer processor is configured to receive the input. The language model is also configured, when executed, to predict the chunk of tokens based on the input. Predicting the chunk of tokens includes determining, for each of the number of attention heads, the corresponding attention map weights from the input. The system also includes a classifier model which, when executed by the computer processor, is configured to predict, using the lookback ratio vector, the hallucination score. The system also includes a post-process language model in which the corresponding attention map weights of at least some of the number of attention heads are modified. The system also includes a server controller in communication with the computer processor and configured, when executed by the computer processor, to determine, from the corresponding attention map weights of each of the number of attention heads, the lookback ratio vector. The server controller is also configured, when executed, to determine that the hallucination score fails to satisfy the predefined threshold, λ, such that the chunk of tokens represents a hallucination of the language mode. The server controller is also configured, when executed, to determine, responsive to the chunk of tokens representing the hallucination, the edit direction. The server controller is also configured, when executed, to modify the language model to generate the post-process language model by adjusting, using the edit direction, the corresponding attention map weights of at least some of the number of attention heads.

One or more embodiments provide for another method. The method includes receiving, from a user device, an input for a language model including a number of decoder layers. Each of the number of decoder layers includes a number of attention heads. The method also includes predicting, by the language model, a chunk of tokens based on the input. Predicting the chunk of tokens includes determining, for each of the number of attention heads, corresponding attention map weights from the input. The method also includes determining, from the corresponding attention map weights of each of the number of attention heads, a lookback ratio vector for the chunk of tokens. The method also includes predicting, using the lookback ratio vector, a hallucination score for the chunk of tokens. The method also includes determining that the hallucination score fails to satisfy a predefined threshold, λ, such that the chunk of tokens represents a hallucination of the language model. The method also includes determining, responsive to the chunk of tokens representing the hallucination, an edit direction for the corresponding attention map weights for the chunk of tokens. The method also includes modifying, to generate a post-process language model, the language model by adjusting, using the edit direction, the corresponding attention map weights of at least some of the number of attention heads. The method also includes executing the post-process language model on the input to generate a revised chunk of tokens. The method also includes determining whether the revised chunk of tokens represents a hallucination of the post-process language model. The method also includes returning, responsive to the revised chunk of tokens failing to represent the hallucination of the post-process language model, the revised chunk of tokens to the user device.

Other aspects of one or more embodiments will be apparent from the following description and the appended claims.

### BRIEF DESCRIPTION OF DRAWINGS

FIG. 1 shows a computing system, in accordance with one or more embodiments.
FIG. 2 shows a flowchart of a method for an improved language model with reduced hallucination, in accordance with one or more embodiments.
FIG. 3 shows a structure of a language model, in accordance with one or more embodiments.
FIG. 4 shows a structure of a language model in relation to a lookback ratio data structure, in accordance with one or more embodiments.
FIG. 5 shows an example of modifying a language model to reduce model hallucination, in accordance with one or more embodiments.
FIG. 6 shows an example of modification to the attention heads of a language model, in accordance with one or more embodiments.
FIG. 7A and FIG. 7B show a computing system and network environment, in accordance with one or more embodiments.

Like elements in the various figures are denoted by like reference numerals for consistency.

### DETAILED DESCRIPTION

One or more embodiments are directed to methods and systems for improving language models to reduce hallucination. One or more embodiments may be particularly useful for reducing a type of hallucination known as "contextual hallucination." Contextual hallucination occurs when a language model generates misleading or unrelated content despite having access to correct information in a context. A context is a source of information that is considered to be true (*e.g.*, scientific measurements, U.S. Internal Revenue Service rules, or other known facts). In other words, during contextual hallucination, even though the language model may reference the context when answering questions, the model nevertheless returns an output that contradicts information in the context.

One or more embodiments represent a technical solution to the technical problem of model hallucination, and particularly represent a technical solution to the technical problem of contextual hallucination. The technical solution involves at least adjusting the weights used by the attention heads of a language model in order to cause the model to give more or less weight to referencing the available context.

Attention heads are a structure of the language model used when processing a query. Adjusting the weights of the attention heads changes the behavior of the model. Thus, adjusting the weights results in a "post-processing language model" (or "post-processing model") that behaves differently than the original language model. The post-processing model of one or more embodiments thus represents an improved language model that is substantially less likely to return a result that represents model hallucination. Furthermore, one or more embodiments may adjust the weights of the language model attention heads repeatedly before returning an answer output, thus further reducing the likelihood of model hallucination.

The details of the technical solution are presented with respect to the following figures and the description thereof. However, briefly, the technical solution may involve first determining a lookback feature ratio vector for a chunk of tokens predicted by the language model. Stated differently, the language model generates at least a portion of a preliminary output of words (the chunk of tokens), and a lookback feature ratio vector is generated for that chunk of tokens. The lookback feature ratio vector is a data structure that stores information describing a degree to which each of the attention heads relied more on the context or more on self-generation when contributing to the generation of the chunk of tokens. "Relying on context" means that the attention head of the language model referenced the context, and "relying on self-generation" means that the attention head of the language model contributed to the generation of the chunk of tokens without reference to the context.

Second, the technical solution may involve using a classifier machine learning model to predict (using the lookback feature ratio vector as an input to the classifier model) whether the chunk of tokens represents a hallucination of the language model. If no hallucination is detected, then the chunk of tokens is permitted either to be further processed by the language model, or to be output by the language model.

Third, if the classifier model predicts that the chunk of tokens represents a hallucination by the language model, then the technical solution involves determining an edit direction for the corresponding attention map weights for the chunk of tokens. The edit direction is an indication of how modifications to the average lookback ratio of attention features (of the lookback ratio vector) influence the hallucination score output by the classifier model. Stated differently, the edit direction represents a quantified assessment of the direction in which the attention heads should be modified, either increasing or decreasing focus of the attention heads on the context or on self-generation.

In an embodiment, a gradient threshold, ε, may be used to select attention heads with relatively substantial gradients. Stated differently, the gradient threshold, ε, may be used to identify those attention heads that quantitatively did not substantially contribute to the hallucination of the language model. Those attention heads that did not substantially contribute to the hallucination of the language model will not be modified. By modifying only attention heads that quantitatively substantially contributed to the hallucination, the model's overall stability and performance may be maintained.

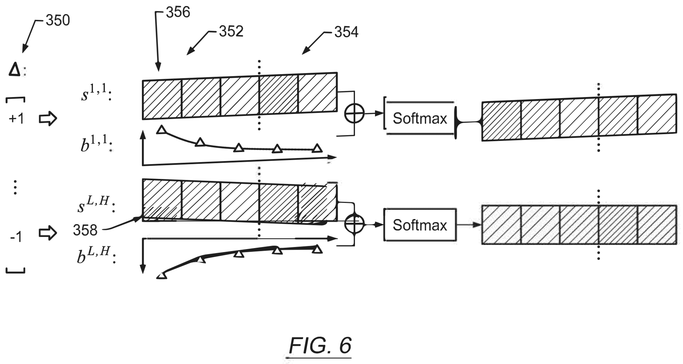

Fourth, the technical solution may involve modifying the language model by adjusting, using the edit direction, the corresponding attention map weights of at least some of the attention heads. For example, those attention heads that quantitatively substantially contributed to the hallucination of the language model may be modified using the edit direction. Details of how the attention heads are modified are provided below (see, for example, FIG. 6).

Adjusting the attention map weights of one or more attention heads changes a language model. Thus, the modified language model may be referred to as a post-processing language model that behaves differently *(i.e.,* produces a different output) than the original language model. In particular, the post-processing model is less likely to generate an output that represents a hallucination.

The input then may be re-applied to the post-process language model. The resulting new output of the post-process language model is less likely to represent a hallucination. In an embodiment, the process of modifying the language model may be reiterated multiple times before returning the output, thereby further reducing the likelihood that the final output of the final post-process model represents a hallucination. For example, the process may be iterated to generate a revised chunk of tokens that is reported as the final output of the language model.

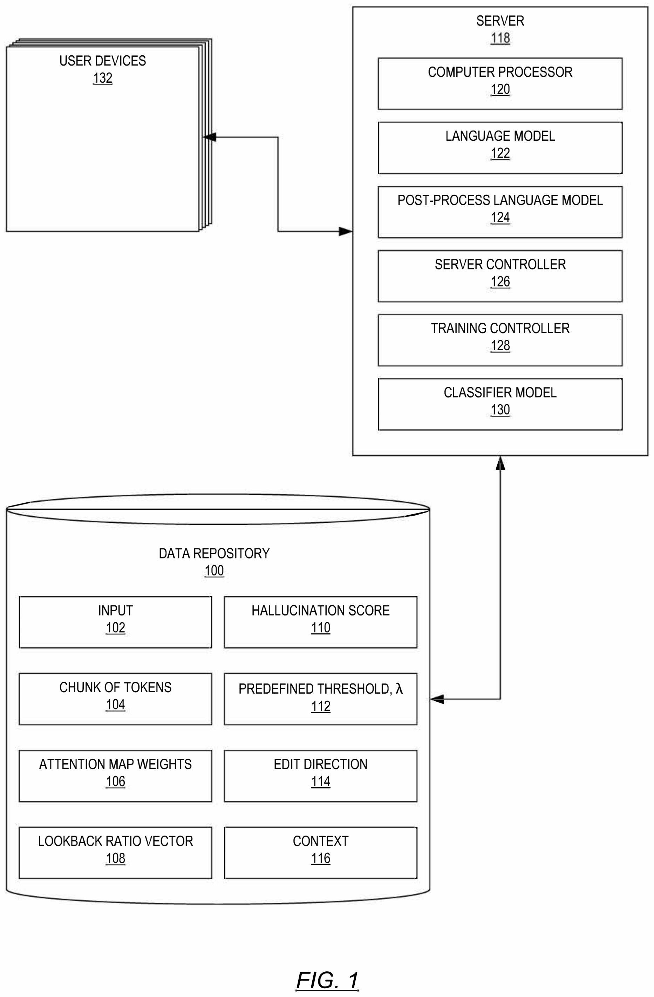

Attention is now turned to the figures. FIG. 1 shows a computing system, in accordance with one or more embodiments. The system shown in FIG. 1 includes a data repository (100). The data repository (100) is a type of storage unit or device *(e.g.,* a file system, database, data structure, or any other storage mechanism) for storing data. The data repository (100) may include multiple different, potentially heterogeneous, storage units and/or devices.

The data repository (100) also stores an input (102). The input (102) is a prompt or other input that is directed to the language model (122) *(i.e.,* the input is intended for execution by the language model (122)). The input (102) takes the form of natural language text, including various alphanumeric characters. The input (102) requests that the language model (122) perform some task *(e.g.,* summarize a large body of text, *etc.).* The input (102) may request that the language model (122) reference the context (116) (defined below) when processing the input (102).

The data repository (100) also stores a chunk of tokens (104). The chunk of tokens (104) is one or more tokens generated by the language model (122) as of result of executing on the input (102). A token is a unit of text stored in a form that a computer can process. A token may be a word, a phrase, an entire sentence, or an entire paragraph. More commonly, a token is a relatively small portion of a text (*e.g.*, a word or a phrase). The chunk of tokens (104) may be the output of the language model (122), or may be generated as an intermediate step of the language model (122) generating a final output of tokens.

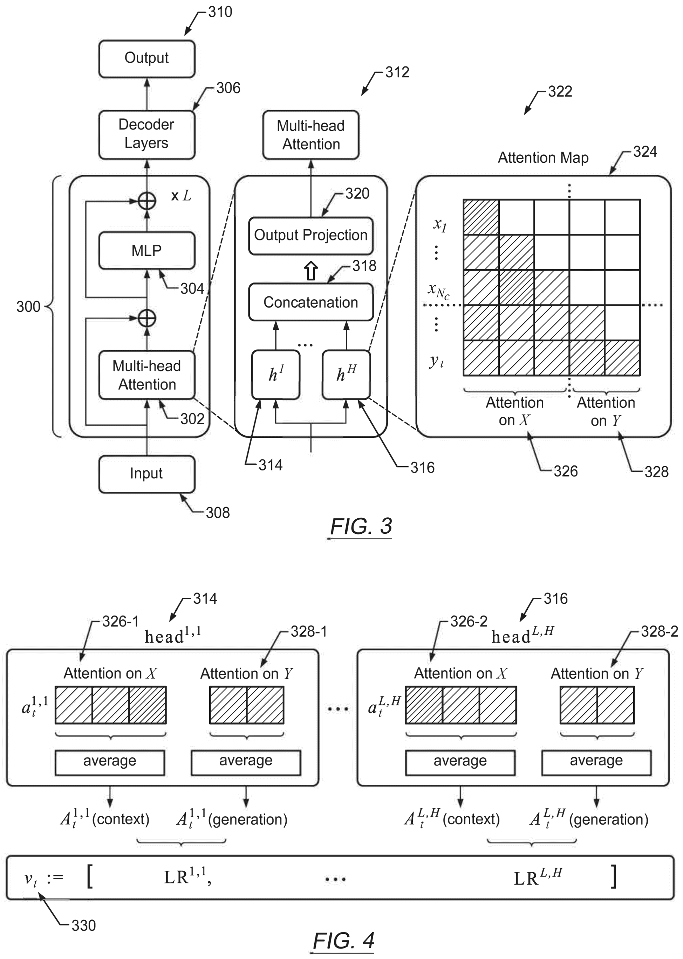

The data repository (100) also stores attention map weights (106). The attention map weights (106) are the values assigned to the weights of an attention map of an attention head. In FIG. 3, the attention map weights (106) are the values reflected in the boxes of the attention maps (e.g., attention map (324) of attention head h^{H} (316)). The attention map weights (106) are used by the language model (300) during generation of the chunk of tokens (104).

The data repository (100) also stores a lookback ratio vector (108). The lookback ratio vector (108) is a data structure that stores a set of lookback ratios. A lookback ratio is, as defined quantitatively with respect to FIG. 4, the average focus of a given attention head on context generation. Thus, the lookback ratio vector (108) is a data structure that stores information regarding the attention that each of the attention heads focus on context generation, as opposed to self-generation. A higher focus on context generation indicates that a given attention head relied more on the context (116) when contributing to the generation of the chunk of tokens (104). In contrast, a lower focus on context generation indicates that a given attention head relied more on self-generation when contributing to the generation of the chunk of tokens (104). Self-generation, again, refers to the fact that the given attention head of the language model contributed to the generation of the chunk of tokens without reference to the context. An example of a lookback ratio vector (108) is shown in FIG. 4.

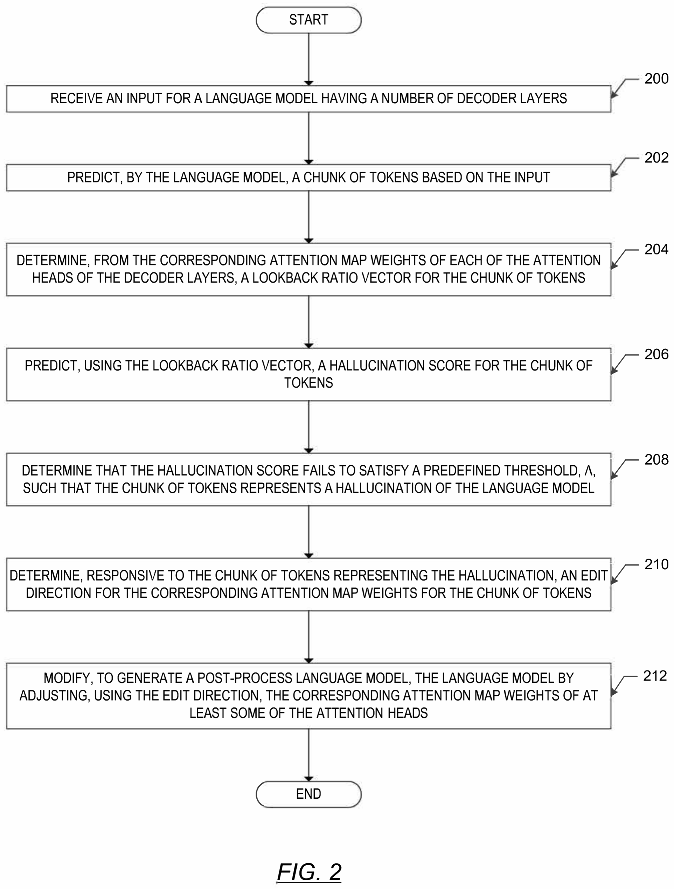

The data repository (100) also stores a hallucination score (110). The hallucination score (110) is a number which indicates the probability that the chunk of tokens (104) represents a hallucination of the language model (122). The hallucination score (110) may be the output of a classifier model, such as classifier model (130) defined below. Generation of the hallucination score (110) is described with respect to step 206 of FIG. 2.

The data repository (100) also stores a predefined threshold, λ (112). The predefined threshold, λ (112) is a number which defines when the output of the language model (122) represents a hallucination. In particular, the hallucination score (110) is compared to the predefined threshold, λ (112). If the hallucination score (110) satisfies the predefined threshold, λ (112), then the language model (122) is determined to have hallucinated, as described further with respect to step 208 of FIG. 2.

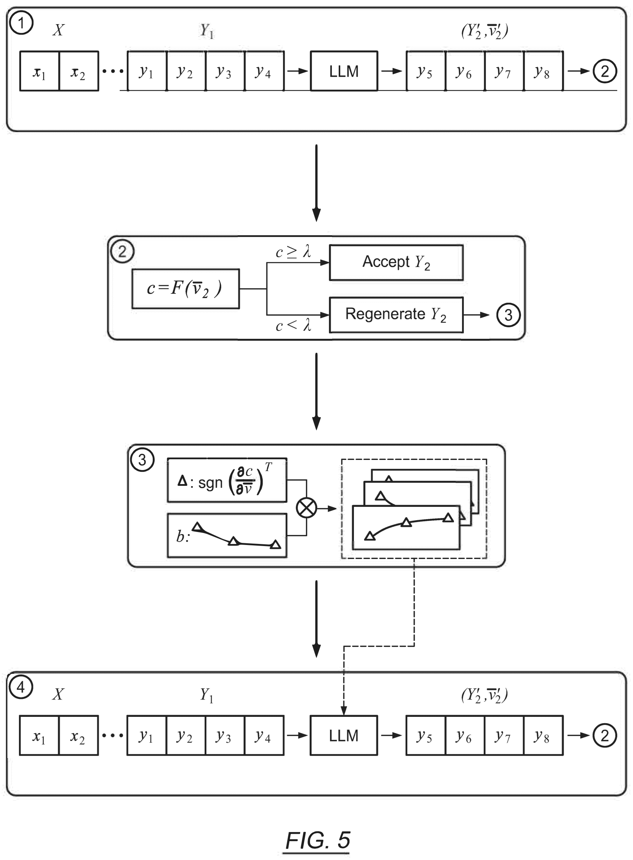

The data repository (100) also stores an edit direction (114). The edit direction (114) is a signed binary vector that indicates whether an attention head should increase focus on the context to elevate the hallucination score when the post-process language model executes on the input (102), thereby optimizing attention allocation in response to detected hallucinations. The edit direction (114) is derived from gradient information from the classifier model (130). The edit direction (114) informs how the prior attention bias should be applied to each attention head, optimizing the attention allocation in response to the detected hallucinations. Use and generation of the edit direction (114) is described with respect to FIG. 2, step 210, and further with respect to FIG. 5.

The data repository (100) also stores a context (116). The context (116) is a source of information that is deemed to be true for purposes of processing the language model (122). The context (116) may be, for example, scientific measurements, rules of a tax agency such as the U.S. Internal Revenue Service, definitions of terms, *etc.* The language model (122), or the post-process language model, may be commanded to refer to the context (116) when generating the chunk of tokens (104).

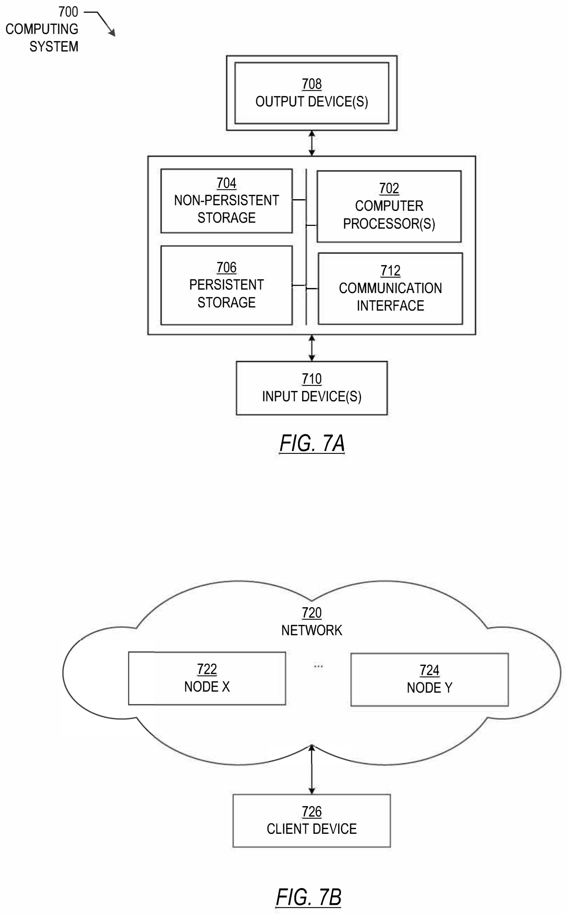

The system shown in FIG. 1 may include other components. For example, the system shown in FIG. 1 also may include a server (118). The server (118) is one or more computer processors, data repositories, communication devices, and supporting hardware and software. The server (118) may be in a distributed computing environment. The server (118) is configured to execute one or more applications, such as the language model (122), the post-process language model, the server controller (126), the training controller (128), and the classifier model (130). An example of a computer system and network that may form the server (118) is described with respect to FIG. 7A and FIG. 7B.

The server (118) includes a computer processor (120). The computer processor (120) is one or more hardware or virtual processors which may execute computer readable program code that defines one or more applications, such as the language model (122), the post-process language model, the server controller (126), the training controller (128), and the classifier model (130). An example of the computer processor (120) is described with respect to the computer processor(s) (702) of FIG. 7A.

The server (118) also includes a language model (122). The language model (122) is a natural language processing machine learning model. An example of the language model (122) may be a large language model, such as CHATGPT^{®} by OpenAI. However, different language models may be used. Use of the language model (122) is described with respect to FIG. 2.

The server (118) also includes a post-process language model (124). The post-process language model (124) is the language model (122), but after the method of FIG. 2 or the method of FIG. 5 has been performed. Thus, the weights of the attention maps of the attention heads in the post-process language model (124) are different than the weights of the attention maps of the attention heads of the language model (122). In an embodiment, it may be said that the post-process language model (124) is a different model than the language model (122), even though the algorithmic structure of the language model (122) has not changed.

The server (118) also may include a server controller (126). The server controller (126) is software or application specific hardware which, when executed by the computer processor (120), controls and coordinates operation of the software or application specific hardware described herein. Thus, the sever controller (126) may control and coordinate execution of the method described with respect to FIG. 2 or the method described with respect to FIG. 5.

The server (118) also may include a training controller (128). The training controller (128) is software or application specific hardware which, when executed by the computer processor (120), trains one or more machine learning models (e.g., the language model (122), the post-process language model, or the classifier model (130)). Briefly, the training controller (128) trains a machine learning model such as the language model (122), the post-process language model (124), or the classifier model (130) by executing the respective model on a set of training data. The output of the model is compared to known outputs (in the case of supervised learning) or to a difference between the current output and a previous output training step (in the case of unsupervised learning). When the output is within a threshold distance of the known output (in the case of supervised learning) or within a threshold distance of the previous output training step (in the case of unsupervised learning), then convergence occurs. Upon convergence the respective model is deemed trained and ready for use. Note that one or more embodiments may not necessarily involve training of the models. Rather, the attention heads are edited, as described with respect to FIG. 2 or FIG. 5. Nevertheless, one or more embodiments also contemplate training or retraining any of the language model (122), the post-process language model (124), or the classifier model (130)

The server (118) also includes a classifier model (130). The classifier model (130) is a classification machine learning model that takes, as input, the chunk of tokens (104). The classifier model (130) generates, as output, a number that represents a likelihood that the chunk of tokens (104) represents a hallucination of the language model (122). The classifier model (130) may be a linear classifier model, such as a logistic regression model, though other classifier machine learning models may be used as the classifier model (130).

The system shown in FIG. 1 also may include one or more user devices (132). The user devices (132) are computing systems (e.g., the computing system (700) shown in FIG. 7A) that communicate with the server (118). The user devices (132) may be used to control or order the execution of the method of FIG. 2 or of FIG. 5, and may be used to control any of the language model (122), the post-process language model (124), the server controller (126), the training controller (128), or the classifier model (130). The user devices (132) also may include one or more display devices. The display devices may be configured to display a new chunk of tokens in place of the chunk of tokens that represented a hallucination of the language model (122).

The user devices (132) may be considered remote or local. A remote user device is a device operated by a third-party (*e.g*., an end user of a chatbot) that does not control or operate the system of FIG. 1. Similarly, the organization that controls the other elements of the system of FIG. 1 may not control or operate the remote user device. Thus, a remote user device may not be considered part of the system of FIG. 1.

In contrast, a local user device is a device operated under the control of the organization that controls the other components of the system of FIG. 1. Thus, a local user device may be considered part of the system of FIG. 1.

While FIG. 1 shows a configuration of components, other configurations may be used without departing from the scope of one or more embodiments. For example, various components may be combined to create a single component. As another example, the functionality performed by a single component may be performed by two or more components.

FIG. 2 shows a flowchart of a method for an improved language model with reduced hallucination, in accordance with one or more embodiments. The method of FIG. 2 may be implemented using the system of FIG. 1 and one or more of the steps may be performed on or received at one or more computer processors.

Step 200 includes receiving an input for a language model having a number of decoder layers. Each of the number of decoder layers includes a number of attention heads, as described with respect to FIG. 1 as well as shown in FIG. 4. Receiving the input for the language model may include receiving a prompt or some other command to perform a language computing task. For example, receiving the input may include a command to the language model to summarize rules, stored in a context, that pertain to a particular subject. Receiving the input may include a prompt that commands a language model to ascertain whether a statement in the prompt is correct in view of the context. In any case, receiving the input includes at least some command to reference the context in some way.

Step 202 includes predicting, by the language model, a chunk of tokens based on the input. Predicting the chunk of tokens includes determining, for each of the number of attention heads, corresponding attention map weights from the input. Predicting the chunk of tokens is performed by predicting a "next token" until a determination is made that no next token should be generated.

In an embodiment, each block of a language model (such as a large language model) may include self-attention blocks and feed-forward transformation blocks. However, a self-attention variant used by language model may include one or more self-attention heads. The self-attention heads perform three different linear projections of input token vectors, producing key, query, and value vectors. Key and query vectors are used to compute attention weights for each valid pair of tokens. The attention weights (after a Softmax function is applied) may be used to take a weighted average of value vectors, which is the output of self-attention. Multi-headed self-attention performs the same procedure in parallel across multiple "heads." Each head has separate, learnable matrices for producing key, query, and value vectors. The final output of the multi-headed self-attention layer may be obtained by aggregating the outputs of each self-attention head (e.g., via adding, concatenating, *etc.)*

Step 204 includes determining, from the corresponding attention map weights of each of the number of attention heads, a lookback ratio vector for the chunk of tokens. As indicated above with respect to FIG. 1, and as shown in FIG. 4, the lookback ratio vector includes, for each of the number of attention heads, a corresponding number of lookback ratios. Each lookback ratio of the corresponding number of lookback ratios includes an average of weights in a direction of context generation, versus self-generation direction of the number of attention heads. Generating the corresponding number of lookback ratios may be based on post-Softmax attention weights of the number of attention heads.

Thus, the lookback ratio vector for the chunk of tokens may be determined by determining the lookback ratio for each of the attention heads, and then inserting corresponding lookback ratios into the appropriate slots in the data structure that form the lookback ratio vector. A specific example of generating a lookback ratio vector is described with respect to FIG. 4.

Step 206 includes predicting, using the lookback ratio vector, a hallucination score for the chunk of tokens. Predicting the hallucination score may be performed by executing a classifier model on the lookback ratio vector. The output of the classifier model is the hallucination score. The classifier model may be trained to predict the hallucination score from the lookback ratio vector as described with respect to FIG. 5.

Step 208 includes determining that the hallucination score fails to satisfy a predefined threshold, λ, such that the chunk of tokens represents a hallucination of the language model. The determination may be performed by comparing the hallucination score output by the classification model to a pre-determined number *(i.e.,* the predefined threshold, λ). If the hallucination score satisfies the predefined threshold, λ *(e.g.,* is greater than, or is equal to or greater than), then the chunk of tokens is deemed to be a hallucination of the language model.

Step 210 includes determining, responsive to the chunk of tokens representing the hallucination, an edit direction for the corresponding attention map weights for the chunk of tokens. As indicated with respect to FIG. 1, the edit direction includes gradient information indicating a direction in which an attention head of the number of attention heads should increase or decrease a focus on context to elevate the hallucination score. The gradient information is derived from the gradient information from the classifier model. A formal mathematical formula defining the edit direction is described with respect to FIG. 5. Thus, the edit direction may be determined as described with respect to FIG. 5.

Step 212 includes modifying, to generate a post-process language model, the language model by adjusting, using the edit direction, the corresponding attention map weights of at least some of the number of attention heads. Adjusting the corresponding attention map weights biases the at least some of the number of attention heads either one of two ways. First, adjusting the weights may favor the language model referencing a context (by modifying one or more attention heads to favor context). Second, adjusting the weights may favor the language model to self-generate. The degree of adjustment of the weights may be determined relative to values for the corresponding attention map weights for the number of attention heads prior to modifying the language model.

Adjusting the corresponding attention map weights may include adjusting by using a prior bias on an original attention map and a hyperparameter that adjusts an intensity of intervention of the corresponding attention map weights. Adjusting the corresponding attention map weights may include adjusting the corresponding attention map weights to increase or decrease a focus of the at least some of the number of attention heads on a context referenced by the language model, relative to self-generation by the language model, when generating the chunk of tokens.

A formal mathematical explanation of how the edit direction may be used to adjust the attention map weights of the attention heads is described with respect to FIG. 5. In any case, the result of step 212 is that the attention map weights of at least one of the attention heads are adjusted, thereby resulting in a post-processing model.

The method of FIG. 2 may be varied, such as to include more or fewer steps, or to modify the steps recited above. For example, in an embodiment, the method also may include identifying, prior to modifying the language model, a subset of the attention heads that most contributed to the hallucination of the language model. Modifying at least some of the attention heads may include modifying only the subset of the number of attention heads.

For example, the edit direction may be a vector including a number of features. The number of features includes a number of values that indicate whether the number of attention heads should increase or decrease a focus on a context to which the language model refers. Identifying the subset of the number of attention heads then includes identifying ones of the number of attention heads for which corresponding ones of the number of values exceeds a threshold, ε.

In another example, the method may be iterated to further improve the language model. For example, the post-process language model may be executed on the input to predict a new chunk of tokens. In this case, the method then includes determining, for each of the number of attention heads, corresponding new attention map weights from the input. Then, the method includes determining from the corresponding new attention map weights, a new lookback ratio vector for the new chunk of tokens. The method then includes predicting a new hallucination score for the chunk of tokens. The method then includes modifying, using a new edit direction for the corresponding new attention map weights and responsive to the new hallucination score failing to satisfy the predefined threshold, λ, the corresponding new attention map weights of at least some of the number of attention heads. The method then includes returning, responsive to the new hallucination score satisfying the predefined threshold, λ, the revised chunk of tokens. Because the new hallucination score satisfies the predefined threshold, λ, the revised chunk of tokens is deemed not to be a hallucination of the language model. Thus, the revised chunk of tokens is returned. Returning the revised chunk of tokens may include displaying the revised chunk of tokens on a display device in place of displaying the chunk of tokens.

In still another variation, the method also may include training the classifier. In the variation, the method includes generating, by the language model, a number of additional chunks of tokens. The method then includes labeling, by a second language model, the number of additional chunks of tokens with a number of labels indicating the number of additional chunks as being either hallucination or non-hallucination. The method then includes identifying additional lookback ratio vectors for the number of additional chunks of tokens. The method then includes training the classifier model using training data including the additional lookback ratio vectors and the number of labels for the number of additional chunks of tokens. Training may be performed as described with respect to the training controller (128) in FIG. 1, taking the labels applied by the second language model as being true.

While the various steps in the flowchart of FIG. 2 are presented and described sequentially, at least some of the steps may be executed in different orders, may be combined or omitted, and at least some of the steps may be executed in parallel. Furthermore, the steps may be performed actively or passively.

FIG. 3 through FIG. 6 show an example of one or more embodiments described above. FIG. 3 shows a structure of a language model, in accordance with one or more embodiments. FIG. 4 shows a structure of a language model in relation to a lookback ratio data structure, in accordance with one or more embodiments. FIG. 5 shows an example of modifying a language model to reduce model hallucination, in accordance with one or more embodiments. FIG. 6 shows an example of modification to the attention heads of a language model, in accordance with one or more embodiments. In FIG. 3 through FIG. 6, common reference numerals refer to common objects having common descriptions.

Turning first to FIG. 3, a language model (300) may be characterized, in one example, as a transformer machine learning model having a multi-head attention layer (302), a multi-layer perceptron (MLP (304)), and a number of decoder layers (306) which ultimately output the language model's final output. The input (308) *(e.g.,* a query, a prompt, *etc.)* is provided to the language model (300). The input is processed by the multi-head attention layer (302), the MLP (304), and the decoder layers (306), and ultimately the language model (300) generates an output (310). The output may be natural language *(e.g.,* a summary of the input, an answer to the input query, *etc.).*

The multi-head attention layer (302) is shown in more detail in callout (312). The multi-head attention layer (302) includes a number of attention heads, such as attention head h¹ (314) through attention head h^{H} (316). The outputs of the attention heads is provided to a concatenation layer (318). The output of the concatenation layer (318) is provided to an output projection layer (320). The output of the output projection layer (320) may be referred to as the multi-head attention, which will be used by the MLP (304) during later processing by the language model, as described above.

Each of the attention heads is defined, at least in part, by an attention map, as shown in callout (322). As the language model (300) predicts the next token of a chunk of tokens, each attention head independently computes a corresponding attention map from the input. In FIG. 3, attention map (324) is the attention map for attention head h^{H} (316), though each of the other attention heads (e.g., attention head h¹ (314)) will output one corresponding attention map. Thus, during processing of a next token, multiple attention maps are generated, one per attention head.

The attention maps, such as attention map (324), are lower triangular matrices where each row includes weights that sum to one. The matrices reflect the relationship of the current token (in a chunk of tokens) with respect to preceding tokens (in the chunk of tokens). A higher weight within the matrix indicates a stronger correlation, suggesting that the language model (300) is more likely to generate tokens closely related to those tokens with higher weights. Note that different attention heads may be tailored to focus on various aspects of the input, allowing for a multi-faceted analysis of token relationships.

In the attention map (324), different hash patterns represent different weights. The denser the hash pattern, the greater the weight. Additionally, different portions of the attention map (324) indicate weights on context ("X") (326) and the preceding generated token sequence ("Y") (328).

Thus, language model (300) represents a transformer model including L decoder layers, each equipped with H attention heads, indexed by 1 and h for the layer and head, respectively. The language model (300) processes an input with length N, which is a concatenation of the context, X = [x1, x2, ... x_{Nc}]^{Nc}, and the preceding generated sequence, Y = [y1, y2, ... yₜ]^{Ng}, where N_{c} and N_{g} denote the lengths of the context and generated sequence, respectively.

With the structure of the language model (300) in mind, as shown in FIG. 3, attention is now turned to an example of the process of one or more embodiments described with respect to FIG. 2. Initially, as shown in FIG. 4, a lookback ratio vector (330) is determined. The lookback ratio vector (330) indicates the model's focus on context versus the model's own output *(i.e.,* self-generation) during next-token prediction, with a higher ratio suggesting greater emphasis on context. Specifically, the lookback ratio vector (330) is a data structure that stores the lookback ratio of each attention head. Each lookback ratio, as defined quantitatively below, is the average focus of the attention head on context generation.

Contextual hallucination occurs when a language model generates an output that does not exist or cannot be inferred from the provided context. The model's lack of attention to the context during the generation process can be the cause of contextual hallucination. The attention map may be used as a feature to detect such contextual hallucination. Specifically, an attention map based feature named "lookback ratio" (or "LR") is defined to model contextual hallucination. As shown in FIG. 4, at the *tₜₕ* decoding step (to predict *yt +* 1), for the *hₜₕ* head in the *lₜₕ* layer, the corresponding LR is defined as:
${LR}_{t}^{l , h} = \frac{{A}_{t}^{l , h} \left(context\right)}{{A}_{t}^{l , h} \left(context\right) + {A}_{t}^{l , h} \left(generation\right)} ,$ (1)
where
${A}_{t}^{l , h} \left(context\right) = \frac{1}{{N}_{c}} {\sum }_{i = 1}^{{N}_{c}} {a}_{i}^{l , h} ,$
${A}_{t}^{l , h} \left(generation\right) = \frac{1}{{N}_{g}} {\sum }_{j = {N}_{c} + 1}^{N} {a}_{j}^{l , h} ,$ (2)
***a*^{*l*,*h*}** denotes the post-Softmax attention weights of the head. Across all heads, the lookback ratio vector (330) is defined as:
${v}_{t} = \left[{LR}_{t}^{1 , 1},{LR}_{t}^{1 , 2}⋯{LR}_{t}^{L , H}\right] .$ (3)

Thus, as shown in FIG. 4, ${a}_{t}^{1 , 1}$ (326-1) shows the last row of the attention map (324) of FIG. 3 for attention head h¹ (314). The last row of the attention map (324) of FIG. 3 includes three weights (326-1) which represents the attention on context ("X"), and two weights (328-1) which represents the attention on self-generation by the attention head h¹ (314). The weights of each are averaged to generate ${A}_{t}^{1 , 1}$ for the context attention, and the ${A}_{t}^{1 , 1}$ for the generation attention. The ${A}_{t}^{1 , 1}$ for both are averaged, which results in the lookback ratio, LR^{1,1} for the attention head h1 (314). The LR^{1,1} becomes the first lookback feature in the lookback ratio vector (330). The process is repeated for each of the attention heads until the last attention head is reached, and the lookback ration for the last attention head (LR^{L,H}) is added as the last feature of the lookback ratio vector (330).

Again, each attention head is associated with a corresponding lookback ratio. Thus, the lookback ratio vector (330) is the data structure that stores the set of lookback ratios for each of the attention heads.

FIG. 5 shows an example of the process for generating a post-processing model, as described with respect to FIG. 2, in the context of the definitions and examples shown in FIG. 3 and FIG. 4. The circled numbers in FIG. 5 show the steps in the process.

In the first step (circle 1), the language model (300) (here, a large language model) predicts a next chunk of tokens, Y₂. In addition, the lookback ratio feature vector, *ν̅*₂ is determined for the attention heads of the language model (300).

In the second step (circle 2), a classifier model *(e.g.,* a linear classifier model) predicts the hallucination score, c, for the generated chunk of tokens with the corresponding feature. If the score satisfies a pre-determined threshold, λ, (also referred to as a hallucination threshold) then the chunk of tokens will be accepted. The language model (300) is determined not to have hallucinated, and the process terminates. However, if the score fails to satisfy the pre-determined threshold, λ, then the process moves to step 3.

The classifier model may be trained based on the lookback ratio feature to model contextual hallucination. Notably, contextually hallucinated contents usually constitute only a portion of the generated text, with the remainder being accurate and relevant. Therefore, it is useful to model hallucination with greater precision, to accurately capture the correlation between problematic attention features and the corresponding hallucination outputs. To train the classifier, a Llama2-7b model may be prompted to generate summaries from a subset of articles *(e.g.,* a subset of 1000 articles) sampled from a greater dataset. The generated outputs are segmented into fixed-size chunks. Each chunk is then annotated by a large language model, which assigns binary labels indicating the presence or absence of hallucination. The attention feature of these chunks, along with their corresponding labels, are used as the training data for the classifier.

Training proceeds by executing the language model on at least some of the subset of articles, and then executing the classifier model to determine whether in each case the language model hallucinated. Because the binary labels represent a known truth whether the output of the language model represents hallucination or not, if the classifier model incorrectly identifies some of the non-hallucinatory outputs as hallucination or incorrectly identifies the hallucinatory outputs as non-hallucination, then a loss function is generated. The loss function is used to modify parameters of the classifier model in an attempt to improve the accuracy of the linear classifier. The process is then repeated until the classifier model correctly predicts hallucination or non-hallucination of the language model outputs more than a predetermined threshold amount *(i.e.,* until the training process reaches convergence). Upon convergence, the classifier model is deemed trained and is used during an inference phase (as opposed to a training phase) in the method shown in FIG. 5 or FIG. 2.

At step 3 (circle 3), an attention edit signal for each of the attention heads is determined. A prior bias of each attention head and an edit direction are derived from a gradient of the score. The details of step 3 are now provided.

As indicated above; to mitigate contextual hallucination, one or more embodiments provide for a strategic intervention in the attention mechanisms of language models. By editing the attention maps of the language models, one or more embodiments enhance the focus on contextual inputs, thereby anchoring the language model's outputs more effectively in the provided context, and thereby reducing hallucinated contents.

The process shown in step 3 of FIG. 5, may be referred to by the acronym "GAME," or Gradient-guided Attention Map Editing. GAME combines prior bias adjustments with gradient signals obtained from an attention feature-based hallucination classifier to facilitate precise and oriented modifications on attention maps, enabling more effective mitigation of contextual hallucinations.

Linear intervention to the attention map may be considered by adding a prior bias (b) on the original attention map. The prior bias may be added to the raw attention scores (s) before the Softmax normalization step in the attention mechanism. This process helps ensure a valid modified attention map after intervention:
$a = Softmax \left(s+η⋅b\right) ,$ (4)
where *η* is a hyperparameter that adjusts the intensity of the intervention.

The design of the prior bias follows two principles: Firstly, the bias should enhance the model's focus on contextual information relative to self-generated content to help mitigate the effects of contextual hallucinations. As the Softmax operation is order-preserving, the first principle suggests that the sum of the bias on the context part should be larger than the generation part, as in Equation (5).${\sum }_{i = 1}^{{N}_{c}} {b}_{i} > {\sum }_{j = {N}_{c} + 1}^{N} {b}_{j} .$ (5)

Secondly, the process should counteract the natural decay of attention that occurs with increasing distance between tokens. Consequently, the bias implementation of one or more embodiments employs a reverse function and takes the form: ${b}_{i} = \frac{1}{i}$, where *bᵢ* denotes bias of the *iₜₕ* token when the language model generates the current token. This function amplifies the model's attention to more distant tokens, effectively counteracting the typical attention decay observed in models like transformer language models. Specifically, the raw attention scores, s, are each weighted with weights, b, that favor the context portion of an attention map. The weighted attention scores are then applied to a Softmax function to generate the prior attention bias.

Incorporating a prior attention bias can encourage the model to generate more context-aware outputs. However, as *η* increases, the large bias gradually disrupts the original behavior of attention heads and thus leads to dramatic model degradation. While the results demonstrate the effectiveness of the prior bias, they also highlight the usefulness of precise attention editing. Specifically, two questions arise:
Q1: when should attention editing be applied?
Q2: where should attention editing be applied?

Addressing Q1 relies on a method for detecting contextual hallucination. Given that hallucinations are usually rare and abnormal events, intervention is necessary only when hallucinated contents are detected. Thus, the targeted approach in step 2 prevents arbitrary bias application, which could otherwise alter the model's desired behavior.

Regarding Q2, it is useful to recognize that different attention heads exhibit diverse functional focuses. Some attention heads prioritize contextual coherence, while others emphasize content generation. Applying a bias without understanding these distinctions can significantly disrupt the intrinsic behaviors of the attention heads, leading to degradation in model performance. Therefore, precise identification and selective editing of attention heads are useful in determining whether to enhance the focus of a given attention head on contextual coherence or content generation.

GAME introduces two advanced techniques addressing the issues previously identified. Initially, GAME employs a hallucination classifier (in step 2) that utilizes attention features as input to compute a hallucination score. If the generation's score fails to meet a predefined threshold (λ), language model hallucination is indicated for the token chunk, thereby indicating the utility of attention editing for at least some of the attention heads.

Moreover, the classifier model at step 2 not only detects hallucination, but also provides gradient information to inform the application of prior biases across different attention heads. This gradient information, termed "edit direction" (Δ), is a signed binary vector that indicates whether an attention head should increase its focus on the context to elevate the hallucination score, thereby optimizing attention allocation in response to detected hallucinations.

In practice, GAME processes outputs in equally sized chunks. Again, an illustrated depiction of the GAME process for generating one chunk is shown in FIG. 5. To help ensure precise and effective modification of the attention maps, and to account for the varied roles of different attention heads, the "edit direction (Δ)" is derived from the gradient information from the classifier. The edit direction informs how the prior attention bias should be applied to each attention head, optimizing the attention allocation in response to the detected hallucinations.

Attention is now turned to deriving the edit direction, Δ. Given a detected hallucinated chunk (Y) with corresponding lookback ratio feature vector, *v̅*, and the computed score, c, the edit direction for regenerating this chunk is defined as:
$Δ = sgn \left({\left[\frac{\partial c}{\partial \overline{v}}\right]}^{T}\right) ,$ (6)
where
$\left\{\begin{matrix}1 & if x \geq ϵ \\ 0 & if - ϵ < x < ϵ \\ - 1 & if x \leq - ϵ ,\end{matrix}\right.$ (7)
with *ε* as a predefined threshold parameter. During regeneration of an attention head, the prior bias is multiplied by the edit direction and then added to the original attention, as shown in FIG. 6.$a = Softmax \left(s+Δ⋅b\right) ,$ (8)

The derivation of Δ incorporates three considerations to effectively guide attention map editing. The first consideration is interpretation of the gradient. The gradient term, ${\left[\frac{\partial c}{\partial \overline{v}}\right]}^{T}$, quantifies how modifications to the average lookback ratio of attention features influence the hallucination score. A higher lookback ratio, which indicates a greater focus on contextual information, is generally associated with reduced hallucination. The gradient term thus reflects the change in attention focus to mitigate hallucination effects. However, since the gradient term is averaged across all tokens within a chunk of tokens, direct application of the gradient term in editing attention map weights is impractical. Instead, we utilize the sign of the gradient, as determined by the *sgn* function shown in equation (6) and equation (7), to determine the general direction for modifying the attention. The generation direction represented by the edit direction, Δ, thereby can be used to guide the regeneration process in a binary manner (either increasing or decreasing focus of an attention map of an attention head toward or away from the context).

A second consideration to guide attention map editing is the effect of the *sgn* function in equation (6) and equation (7). Utilizing the *sgn* function simplifies the gradient information to a directional indicator that instructs whether to enhance or reduce the attention focus on specific elements of the context. This approach avoids the complexities and potential overfitting that might arise from using the precise gradient values, providing a robust mechanism for attention modification.

A third consideration to guide attention map editing is the role of a gradient threshold, ε. The gradient threshold, ε, serves to filter out attention heads with relatively minor gradients. In other words, those attention heads that contributed below a threshold amount to the generation of the chunk of tokens that represents hallucination of the language model will not be modified as described below in step 4. This selection criterion helps ensure that only those attention heads with substantial discrepancies in attention allocation, thereby indicating a strong need for adjustment of their attention maps, are edited. Attention heads with gradients below the gradient threshold, ε, are considered adequately aligned and are not subjected to modification. This selective editing helps maintain the overall stability of the language model, and may prevents unnecessary adjustments that could disrupt the performance of the language model.

Attention is now turned to step 4 as shown in FIG. 4. Step 4 occurs after at least one of the attention heads in the language model has been adjusted according to the method described above. Thus, step 4 is performed by the post-processing model.

In step 4 (circle 4), the post-processing model generates a revised chunk of tokens from the input. Thus, the revised chunk of tokens is generated with the attention heads, as modified by the method described with respect to step 3. The likelihood of hallucination is substantially less when using the post-processing model to process the input.

Nevertheless, the steps may be repeated for the new output of the post-processing model. Thus, if the post-processing model hallucinates, then the post-processing model may be modified again by the same procedure as in step 3. The process may continue to iterate until either the classifier model outputs a result that satisfies the predefined threshold, λ. If no qualified chunk of tokens is generated after a predetermined number of iterations of the process of FIG. 5, then the chunk of tokens with the highest score at step 2 may be accepted. In any case, only the accepted chunk of tokens *(i.e.,* the chunk of tokens that satisfies step 2, or that has the highest score at step 2) may be output to the user or provided to some other computing process. In any case, the final post-processing language model is unlikely to hallucinate, as compared to the original language model.

The method of FIG. 2 or the method of FIG. 5 may be performed in real time as each new query is provided to the language model. Thus, the language model may be iteratively updated with each new query. Thus, the reduction in model hallucination may be specific to a query, thereby further decreasing the overall occurrence of language model hallucination.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

Attention is now turned to FIG. 6. FIG. 6 shows an example of how the attention maps of multiple attention heads may be edited, as described with using the edit direction, Δ, as described with respect to step 3 of FIG. 5. The edit direction (350) indicates whether the weights should favor the context focus (352) or the self-generation focus (354) of each of the attention maps (e.g., attention map (356) or attention map (358)) of the attention heads (see FIG. 3 for the relationship between attention maps and attention heads). A Softmax function is applied to each attention map to generate an edited attention map for each attention head *(e.g.,* edited attention map (360) and edited attention map (362)). As a result, the corresponding attention heads of the language model (e.g., the language model (300) of FIG. 3) are modified, resulting in the post-processing language model which exhibits substantially reduced model hallucination, as described above.

For example, as shown in FIG. 7A, the computing system (700) may include one or more computer processor(s) (702), non-persistent storage device(s) (704), persistent storage device(s) (706), a communication interface (708) (e.g., Bluetooth interface, infrared interface, network interface, optical interface, etc.), and numerous other elements and functionalities that implement the features and elements of the disclosure. The computer processor(s) (702) may be an integrated circuit for processing instructions. The computer processor(s) (702) may be one or more cores, or micro-cores, of a processor. The computer processor(s) (702) includes one or more processors. The computer processor(s) (702) may include a central processing unit (CPU), a graphics processing unit (GPU), a tensor processing unit (TPU), combinations thereof, etc.

The input device(s) (710) may include a touchscreen, keyboard, mouse, microphone, touchpad, electronic pen, or any other type of input device. The input device(s) (710) may receive inputs from a user that are responsive to data and messages presented by the output device(s) (712). The inputs may include text input, audio input, video input, etc., which may be processed and transmitted by the computing system (700) in accordance with one or more embodiments. The communication interface (708) may include an integrated circuit for connecting the computing system (700) to a network (not shown) (e.g., a local area network (LAN), a wide area network (WAN) such as the Internet, mobile network, or any other type of network) or to another device, such as another computing device, and combinations thereof.

Further, the output device(s) (712) may include a display device, a printer, external storage, or any other output device. One or more of the output device(s) (712) may be the same or different from the input device(s) (710). The input device(s) (710) and output device(s) (712) may be locally or remotely connected to the computer processor(s) (702). Many different types of computing systems exist, and the aforementioned input device(s) (710) and output device(s) (712) may take other forms. The output device(s) (712) may display data and messages that are transmitted and received by the computing system (700). The data and messages may include text, audio, video, etc., and include the data and messages described above in the other figures of the disclosure.

Software instructions in the form of computer readable program code to perform embodiments may be stored, in whole or in part, temporarily or permanently, on a non-transitory computer readable medium such as a solid state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (702), is configured to perform one or more embodiments, which may include transmitting, receiving, presenting, and displaying data and messages described in the other figures of the disclosure. Additionally, or alternatively, a computer readable program code can include transient media such as carrier waves and transmission media.

The computing system (700) in FIG. 7A may be connected to, or be a part of, a network. For example, as shown in FIG. 7B, the network (720) may include multiple nodes *(e.g.,* node X (722) and node Y (724), as well as extant intervening nodes between node X (722) and node Y (724)). Each node may correspond to a computing system, such as the computing system shown in FIG. 7A, or a group of nodes combined may correspond to the computing system shown in FIG. 7A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (700) may be located at a remote location and connected to the other elements over a network.

The nodes (e.g., node X (722) and node Y (724)) in the network (720) may be configured to provide services for a client device (726). The services may include receiving requests and transmitting responses to the client device (726). For example, the nodes may be part of a cloud computing system. The client device (726) may be a computing system, such as the computing system shown in FIG. 7A. Further, the client device (726) may include or perform all or a portion of one or more embodiments.

The computing system of FIG. 7A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.*, data presented as actual data values through text, or rendered by the computing device into a visual representation of the data, such as through visualizing a data model.

Thus, from one perspective, there has now been described a method including receiving an input for a language model including decoder layers having attention heads. The language model predicts a chunk of tokens based on the input. Predicting includes determining, for each of the attention heads, corresponding attention map weights from the input. The method also includes determining, from the corresponding attention map weights of each of the attention heads, a lookback ratio vector for the chunk of tokens. A hallucination score for the chunk of tokens is predicted using the lookback ratio vector. A determination is made that the hallucination score fails to satisfy a predefined threshold, λ, such that the chunk of tokens represents a hallucination of the language model. An edit direction for the corresponding attention map weights for the chunk of tokens is determined. The attention map weights of at least some attention heads are modified to generate a post-process language model.

As used herein, the term "connected to" contemplates multiple meanings. A connection may be direct or indirect (e.g., through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers *(e.g.,* first, second, third, *etc.)* may be used as an adjective for an element *(i.e.,* any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

Further examples of feature combinations taught by the present disclosure are set out in the following numbered clauses: What is claimed is:
1. A method comprising:
   receiving an input for a language model comprising a plurality of decoder layers, wherein each of the plurality of decoder layers comprises a plurality of attention heads;
   predicting, by the language model, a chunk of tokens based on the input, wherein predicting the chunk of tokens comprises determining, for each of the plurality of attention heads, corresponding attention map weights from the input;
   determining, from the corresponding attention map weights of each of the plurality of attention heads, a lookback ratio vector for the chunk of tokens;
   predicting, using the lookback ratio vector, a hallucination score for the chunk of tokens;
   determining that the hallucination score fails to satisfy a predefined threshold, λ, such that the chunk of tokens represents a hallucination of the language model;
   determining, responsive to the chunk of tokens representing the hallucination, an edit direction for the corresponding attention map weights for the chunk of tokens; and
   modifying the language model by adjusting, using the edit direction, the corresponding attention map weights of at least some of the plurality of attention heads to generate a post-process language model.
2. The method of clause 1, further comprising:
   identifying, prior to modifying the language model, a subset of the plurality of attention heads that contributed most to the hallucination of the language model,
   wherein modifying at least some of the plurality of attention heads comprises modifying only the subset of the plurality of attention heads.
3. The method of clause 2,
   wherein the edit direction comprises a vector comprising a plurality of features,
   wherein the plurality of features comprise a plurality of values that indicate whether the plurality of attention heads should increase or decrease a focus on a context to which the language model refers, and
   wherein identifying the subset of the plurality of attention heads comprises:
      identifying ones of the plurality of attention heads for which corresponding ones of the plurality of values exceeds a threshold, ε.
4. The method of any preceding clause, wherein adjusting the corresponding attention map weights biases the at least some of the plurality of attention heads either:
   1) to favor the language model referencing a context; or
   2) to favor the language model to self-generate, relative to values for the corresponding attention map weights for the plurality of attention heads prior to modifying the language model.
5. The method of clause 4, wherein adjusting the corresponding attention map weights comprises adjusting the corresponding attention map weights using a prior bias on an original attention map and a hyperparameter that adjusts an intensity of intervention of the corresponding attention map weights.
6. The method of any preceding clause, further comprising:
   executing the post-process language model on the input to predict a new chunk of tokens, including determining, for each of the plurality of attention heads, corresponding new attention map weights from the input;
   determining from the corresponding new attention map weights, a new lookback ratio vector for the new chunk of tokens;
   predicting a new hallucination score for the chunk of tokens;
   modifying, using a new edit direction for the corresponding new attention map weights and responsive to the new hallucination score failing to satisfy the predefined threshold, λ, the corresponding new attention map weights of at least some of the plurality of attention heads; and
   returning, responsive to the new hallucination score satisfying the predefined threshold, λ, the new chunk of tokens.
7. The method of clause 6,
   wherein the new hallucination score satisfies the predefined threshold, λ, and
   wherein returning the new chunk of tokens comprises displaying the new chunk of tokens on a display device in place of displaying the chunk of tokens.
8. The method of any preceding clause,
   wherein the lookback ratio vector comprises, for each of the plurality of attention heads, a corresponding plurality of lookback ratios, and
   wherein each lookback ratio of the corresponding plurality of lookback ratios comprises an average of weights in a direction of context generation versus self-generation direction of the plurality of attention heads.
9. The method of clause 8, further comprising:
   generating the corresponding plurality of lookback ratios based on post-Softmax attention weights of the plurality of attention heads.
10. The method of any preceding claim, wherein the edit direction comprises gradient information indicating a direction in which an attention head of the plurality of attention heads increases or decreases a focus on context to elevate the hallucination score, λ.
11. The method of any preceding clause, wherein adjusting the corresponding attention map weights comprises adjusting the corresponding attention map weights to increase or decrease a focus of the at least some of the plurality of attention heads on a context referenced by the language model, relative to self-generation by the language model, when generating the chunk of tokens.
12. The method of any preceding clause, wherein predicting the hallucination score comprises:
   executing a classifier model on the lookback ratio vector to output the hallucination score.
13. The method of clause 12, further comprising:
   generating, by the language model, a plurality of additional chunks of tokens;
   labeling, by a second language model, the plurality of additional chunks of tokens with a plurality of labels indicating the plurality of additional chunks as being either hallucination or non-hallucination;
   identifying additional lookback ratio vectors for the plurality of additional chunks of tokens; and
   training the classifier model using training data comprising the additional lookback ratio vectors and the plurality of labels for the plurality of additional chunks of tokens.
14. A system comprising:
   a computer processor;
   a data repository in communication with the computer processor and storing:
      an input,
      a chunk of tokens,
      corresponding attention map weights,
      a lookback ratio vector for the chunk of tokens,
      a hallucination score,
      a predefined threshold, λ, and
      an edit direction for the corresponding attention map weights for the chunk of tokens;
   a language model, executable by the computer processor, and comprising a plurality of decoder layers, wherein each of the plurality of decoder layers comprises a plurality of attention heads, wherein the language model, when executed by the computer processor is configured to:
      receive the input, and
      predict the chunk of tokens based on the input, wherein predicting the chunk of tokens comprises determining, for each of the plurality of attention heads, the corresponding attention map weights from the input;
   a classifier model which, when executed by the computer processor, is configured to predict, using the lookback ratio vector, the hallucination score;
   a post-process language model in which the corresponding attention map weights of at least some of the plurality of attention heads are modified; and
   a server controller in communication with the computer processor and configured, when executed by the computer processor, to:
      determine, from the corresponding attention map weights of each of the plurality of attention heads, the lookback ratio vector,
      determine that the hallucination score fails to satisfy the predefined threshold, λ, such that the chunk of tokens represents a hallucination of the language mode,
      determine, responsive to the chunk of tokens representing the hallucination, the edit direction, and
      modify the language model to generate the post-process language model by adjusting, using the edit direction, the corresponding attention map weights of at least some of the plurality of attention heads.
15. The system of clause 14,
   wherein the server controller is further configured to execute the post-process language model on the input to generate a new chunk of tokens, and
   wherein the system further comprises a display device configured to display the new chunk of tokens in place of the chunk of tokens.
16. The system of clause 14 or clause 15,
   wherein the server controller is further configured to identify, prior to modifying the language model, a subset of the plurality of attention heads that most contributed to the hallucination of the language model, and
   wherein modifying at least some of the plurality of attention heads comprises modifying only the subset of the plurality of attention heads.
17. The system of any of clauses 14 to 16, wherein adjusting the corresponding attention map weights comprises adjusting the corresponding attention map weights to increase or decrease a focus of the at least some of the plurality of attention heads on a context referenced by the language model, relative to self-generation by the language model, when generating the chunk of tokens.
18. The system of any of clauses 14 to 17, wherein the system further comprises:
   a classifier model, executable by the computer processor, and configured to predict the hallucination score by executing the classifier model on the lookback ratio vector.
19. The system of clause 18, further comprising:
   a training controller which, when executed by the computer processor, is configured to:
   generate, by the language model, a plurality of additional chunks of tokens;
   label, by a second language model, the plurality of additional chunks of tokens with a plurality of labels indicating the plurality of additional chunks as being either hallucination or non-hallucination;
   identify additional lookback ratio vectors for the plurality of additional chunks of tokens; and
   train the classifier model using training data comprising the additional lookback ratio vectors and the plurality of labels for the plurality of additional chunks of tokens.
20. A method comprising:
   receiving, from a user device, an input for a language model comprising a plurality of decoder layers, wherein each of the plurality of decoder layers comprises a plurality of attention heads;
   predicting, by the language model, a chunk of tokens based on the input, wherein predicting the chunk of tokens comprises determining, for each of the plurality of attention heads, corresponding attention map weights from the input;
   determining, from the corresponding attention map weights of each of the plurality of attention heads, a lookback ratio vector for the chunk of tokens;
   predicting, using the lookback ratio vector, a hallucination score for the chunk of tokens;
   determining that the hallucination score fails to satisfy a predefined threshold, λ, such that the chunk of tokens represents a hallucination of the language model;
   determining, responsive to the chunk of tokens representing the hallucination, an edit direction for the corresponding attention map weights for the chunk of tokens;
   modifying, to generate a post-process language model, the language model by adjusting, using the edit direction, the corresponding attention map weights of at least some of the plurality of attention heads;
   executing the post-process language model on the input to generate a revised chunk of tokens;
   determining whether the revised chunk of tokens represents a hallucination of the post-process language model; and
   returning, responsive to the revised chunk of tokens failing to represent the hallucination of the post-process language model, the revised chunk of tokens to the user device.

## Claims

1. A method comprising:
receiving an input for a language model comprising a plurality of decoder layers, wherein each of the plurality of decoder layers comprises a plurality of attention heads;
predicting, by the language model, a chunk of tokens based on the input, wherein predicting the chunk of tokens comprises determining, for each of the plurality of attention heads, corresponding attention map weights from the input;
determining, from the corresponding attention map weights of each of the plurality of attention heads, a lookback ratio vector for the chunk of tokens;
predicting, using the lookback ratio vector, a hallucination score for the chunk of tokens;
determining that the hallucination score fails to satisfy a predefined threshold, λ, such that the chunk of tokens represents a hallucination of the language model;
determining, responsive to the chunk of tokens representing the hallucination, an edit direction for the corresponding attention map weights for the chunk of tokens; and
modifying the language model by adjusting, using the edit direction, the corresponding attention map weights of at least some of the plurality of attention heads to generate a post-process language model.

2. The method of claim 1, further comprising:
identifying, prior to modifying the language model, a subset of the plurality of attention heads that contributed most to the hallucination of the language model,
wherein modifying at least some of the plurality of attention heads comprises modifying only the subset of the plurality of attention heads.

3. The method of claim 2,
wherein the edit direction comprises a vector comprising a plurality of features,
wherein the plurality of features comprise a plurality of values that indicate whether the plurality of attention heads should increase or decrease a focus on a context to which the language model refers, and
wherein identifying the subset of the plurality of attention heads comprises:
identifying ones of the plurality of attention heads for which corresponding ones of the plurality of values exceeds a threshold, ε.

4. The method of any preceding claim, wherein adjusting the corresponding attention map weights biases the at least some of the plurality of attention heads either:
1) to favor the language model referencing a context; or
2) to favor the language model to self-generate, relative to values for the corresponding attention map weights for the plurality of attention heads prior to modifying the language model.

5. The method of claim 4, wherein adjusting the corresponding attention map weights comprises adjusting the corresponding attention map weights using a prior bias on an original attention map and a hyperparameter that adjusts an intensity of intervention of the corresponding attention map weights.

6. The method of any preceding claim, further comprising:
executing the post-process language model on the input to predict a new chunk of tokens, including determining, for each of the plurality of attention heads, corresponding new attention map weights from the input;
determining from the corresponding new attention map weights, a new lookback ratio vector for the new chunk of tokens;
predicting a new hallucination score for the chunk of tokens;
modifying, using a new edit direction for the corresponding new attention map weights and responsive to the new hallucination score failing to satisfy the predefined threshold, λ, the corresponding new attention map weights of at least some of the plurality of attention heads; and
returning, responsive to the new hallucination score satisfying the predefined threshold, λ, the new chunk of tokens.

7. The method of claim 6,
wherein the new hallucination score satisfies the predefined threshold, λ, and
wherein returning the new chunk of tokens comprises displaying the new chunk of tokens on a display device in place of displaying the chunk of tokens.

8. The method of any preceding claim,
wherein the lookback ratio vector comprises, for each of the plurality of attention heads, a corresponding plurality of lookback ratios, and
wherein each lookback ratio of the corresponding plurality of lookback ratios comprises an average of weights in a direction of context generation versus self-generation direction of the plurality of attention heads.

9. The method of claim 8, further comprising:
generating the corresponding plurality of lookback ratios based on post-Softmax attention weights of the plurality of attention heads.

10. The method of any preceding claim, wherein the edit direction comprises gradient information indicating a direction in which an attention head of the plurality of attention heads increases or decreases a focus on context to elevate the hallucination score, λ.

11. The method of any preceding claim, wherein adjusting the corresponding attention map weights comprises adjusting the corresponding attention map weights to increase or decrease a focus of the at least some of the plurality of attention heads on a context referenced by the language model, relative to self-generation by the language model, when generating the chunk of tokens.

12. The method of any preceding claim, wherein predicting the hallucination score comprises:
executing a classifier model on the lookback ratio vector to output the hallucination score.

13. The method of claim 12, further comprising:
generating, by the language model, a plurality of additional chunks of tokens;
labeling, by a second language model, the plurality of additional chunks of tokens with a plurality of labels indicating the plurality of additional chunks as being either hallucination or non-hallucination;
identifying additional lookback ratio vectors for the plurality of additional chunks of tokens; and
training the classifier model using training data comprising the additional lookback ratio vectors and the plurality of labels for the plurality of additional chunks of tokens.

14. A system comprising:
a computer processor;
a data repository in communication with the computer processor and storing:
an input,
a chunk of tokens,
corresponding attention map weights,
a lookback ratio vector for the chunk of tokens,
a hallucination score,
a predefined threshold, λ, and
an edit direction for the corresponding attention map weights for the chunk of tokens;
a language model, executable by the computer processor, and comprising a plurality of decoder layers, wherein each of the plurality of decoder layers comprises a plurality of attention heads, wherein the language model, when executed by the computer processor is configured to:
receive the input, and
predict the chunk of tokens based on the input, wherein predicting the chunk of tokens comprises determining, for each of the plurality of attention heads, the corresponding attention map weights from the input;
a classifier model which, when executed by the computer processor, is configured to predict, using the lookback ratio vector, the hallucination score;
a post-process language model in which the corresponding attention map weights of at least some of the plurality of attention heads are modified; and
a server controller in communication with the computer processor and configured, when executed by the computer processor, to:
determine, from the corresponding attention map weights of each of the plurality of attention heads, the lookback ratio vector,
determine that the hallucination score fails to satisfy the predefined threshold, λ, such that the chunk of tokens represents a hallucination of the language mode,
determine, responsive to the chunk of tokens representing the hallucination, the edit direction, and
modify the language model to generate the post-process language model by adjusting, using the edit direction, the corresponding attention map weights of at least some of the plurality of attention heads.

15. The system of claim 14,
wherein the server controller is further configured to execute the post-process language model on the input to generate a new chunk of tokens, and
wherein the system further comprises a display device configured to display the new chunk of tokens in place of the chunk of tokens.
